# EUROPÄISCHE PATENTSCHRIFT

(11) **EP 4 210 895 B1**
(45) Veröffentlichungstag und Bekanntmachung des Hinweises auf die Patenterteilung: **22.01.2025**
(21) Anmeldenummer: 21777212.8
(22) Anmeldetag: 07.09.2021
(51) Int. Cl.: B23K 26/082, B23K 26/08, B23K 26/244, H01M 8/0297

(54) **VERFAHREN ZUM FÜGEN VON WENIGSTENS ZWEI KOMPONENTEN EINER BRENNSTOFFZELLE UND VORRICHTUNG ZUR DURCHFÜHRUNG DES VERFAHRENS**
METHOD FOR JOINING AT LEAST TWO COMPONENTS OF A FUEL CELL AND DEVICE FOR CARRYING OUT THE METHOD
PROCÉDÉ D'ASSEMBLAGE D'AU MOINS DEUX COMPOSANTS D'UNE PILE À COMBUSTIBLE ET DISPOSITIF PERMETTANT DE METTRE EN OEUVRE CE PROCÉDÉ

(30) Priorität: 11.09.2020 DE 102020123694
(43) Veröffentlichungstag der Anmeldung: 19.07.2023
(73) Patentinhaber: AUDI AG, 85057 Ingolstadt (DE)
(72) Erfinder: BÖHM, Daniel, 74196 Neuenstadt (DE); WEBERPALS, Jan-Philipp, 74232 Abstatt (DE); GRETZER, Markus, 85072 Eichstätt (DE); HEUBERGER, Eva, 85055 Ingolstadt (DE)
(74) Vertreter: Hentrich Patent- & Rechtsanwaltspartnerschaft mbB
(86) Internationale Anmeldenummer: PCT/EP2021/074606
(87) Internationale Veröffentlichungsnummer: WO 2022/053462

(56) Entgegenhaltungen:
- US-A1- 2016 096 237
- US-B2- 8 354 203

## Beschreibung

Die Erfindung betrifft ein Verfahren zum Fügen von wenigstens zwei Komponenten einer Brennstoffzelle, insbesondere zum Fügen zweier Einzelplatten einer Brennstoffzelle zu einer Bipolarplatte.

Bipolarplatten werden bei Brennstoffzellen und insbesondere in Brennstoffzellenstapeln verwendet. Mithilfe der Bipolarplatten werden dabei der Brennstoff einerseits an eine benachbarte Anode einer ersten Brennstoffzelle und das Kathodengas an eine Kathode einer benachbarten zweiten Brennstoffzelle geleitet und verteilt, wobei die Bipolarplatte zudem Leitungen zur Führung eines Kühlmediums vorsieht. Eine Bipolarplatte ist meist aus zwei als Halbschalen gebildeten Einzelplatten hergestellt, die bei aus Graphit gebildeten Bipolarplatten miteinander verklebt werden. Metallische Bipolarplatten umfassen typischerweise zwei zumindest abschnittsweise miteinander verschweißte Einzelplatten.

Eine Vorrichtung zur Durchlauffertigung von Bipolarplatten unter Einsatz einer Laserschweißeinrichtung zeigt die DE 10 2018 219 056 A1. In der WO 2018 / 237 049 A1 wird die additive Fertigung von Bipolarplatten unter Einsatz eines Lasersinterverfahrens beschrieben. Eine Vorrichtung und ein Schweißverfahren zum Verschweißen zweier Einzelplatten zu einer Bipolarplatte beschreibt die US 2020 / 0 206 843 A1. Die US 8 354 203 B2 beschreibt eine Vorrichtung und ein Verfahren zur Herstellung von Bipolarplatten, wobei zwei Einzelplatten miteinander zur Bipolarplatte verschweißt werden. Auch in der US 2016 / 0 096 237A1 wird eine Vorrichtung zum Laserschweißen zweier Einzelplatten beschrieben, wobei ein Polygonrad dafür genutzt wird, um den Laserstrahl abzulenken.

Es hat sich herausgestellt, dass beim Laserschweißen von Komponenten einer Brennstoffzelle, insbesondere beim Laserschweißen von Bipolarplatten das Risiko einer Porenbildung vorliegt, welcher ein lokal zu starker Wärmeeintrag in die Einzelplatten zugrunde liegt. Durch diese zu starke Erhitzung können Undichtigkeiten an Schweißnähten auftreten, die vor allem dann zum Tragen kommen, wenn die Bipolarplatten mit einer sehr langen Schweißnaht gestaltet sind. Aufgrund des verstärkten Wärmeeintrags in das gefügte Material, kann ein unerwünschter Verzug an dem Bauteil auftreten, welcher negative Auswirkungen auf die nachfolgende Prozesskette zur Herstellung der Brennstoffzelle, insbesondere bei der Montage, führt.

Es ist daher die Aufgabe der vorliegenden Erfindung, ein Verfahren zum Fügen von wenigstens zwei Komponenten einer Brennstoffzelle anzugeben, bei denen ein geringerer Wärmeeintrag in das Material vorliegt, womit die aus dem Stand der Technik bekannten Nachteile reduziert werden.

Diese Aufgabe wird durch ein Verfahren mit den Merkmalen des Anspruchs 1 gelöst. Vorteilhafte Ausgestaltungen mit zweckmäßigen Weiterbildungen der Erfindung sind in den abhängigen Ansprüchen angegeben.

Das erfindungsgemäße Verfahren zeichnet sich durch die folgenden Schritte aus:
- Bereitstellen einer ersten Komponente der Brennstoffzelle und Bereitstellen wenigstens einer zweiten Komponente der Brennstoffzelle,
- Entsenden eines gepulsten Laserstrahls einer Lasereinrichtung auf ein rotierendes, verspiegeltes Polygonrad, wodurch der Laserstrahl eine Fügelinie aus einer Vielzahl an überlappend aneinandergereihten, punktförmigen und/oder strichförmigen Fügestellen an den Komponenten bildet.

Mit diesem Verfahren ist es nicht nur möglich, beispielsweise zwei (metallische) Einzelplatten zu einer Bipolarplatte zu verbinden, sondern es können auch andere Bestandteile einer Brennstoffzelle miteinander dauerhaft stoffschlüssig verbunden werden. So ist es mit dem Verfahren beispielsweise möglich, zugleich die Membranelektrodenanordnung mit einer Bipolarplatte oder einer Einzelplatte zu fügen, wobei mittels des Laserstrahls beispielsweise Dichtungsmaterial soweit aufgeschmolzen wird, dass dieses adhäsive Eigenschaften entwickelt und bei der Abkühlung die einzelnen Komponenten miteinander stoffschlüssig bindet. Unter "Fügen" versteht vorzugsweise ein Verschweißen der beiden Komponenten. Mit dem erfindungsgemäßen Verfahren kann auch eine Einheitszelle dauerhaft stoffschlüssig zu einem Verbund gebunden werden.

Der erfindungsgemäße Fügeprozess erfolgt unter Einsatz einer neuen Lasertechnologie, die das Polygonrad verwendet. Das Polygonrad kann dabei als Hochgeschwindigkeitsscanner (vorzugsweise High-Speed Galvanoscanner) dienen, das mit einer Umdrehung von zwischen 1.000 und 12.000 Umdrehungen pro Minute umläuft. Erfasst man - in Zeitlupe - einzelne Momentaufnahmen der Laserbestrahlung des Polygonrads, so stellt man fest, dass aufgrund der Verwendung einer gepulsten Laserquelle und aufgrund der sich zeitlichen ändernden Ablenkung des Strahls von der Mantelfläche des Polygonrads viele einzelne Stellen auf der Oberfläche der Komponenten mit dem Laser bestrahlt werden, an welchen die punktförmigen und/oder linienförmigen Fügestellen hervorgerufen werden, die zu dem Fügen der Komponenten führen. Dieses Verfahren eignet sich insbesondere für linienorientierte, flächige Anwendungen, weil dadurch die Prozesszeit enorm reduziert werden kann. Außerdem lässt sich durch den Einsatz des rotierenden Polygonrads ein insgesamt geringerer Wärmeeintrag in das Rohmaterial erzielen. Mit anderen Worten lässt sich auf diese Weise auch eine quasistationäre Bearbeitung der Komponenten mit reduziertem Wärmeeintrag erreichen.

Es ist nicht zwingend erforderlich, dass beim Erzeugen der Fügestellen rotationssymmetrische oder vollständig kreisflächenförmige Punkte entstehen, womit auch unrund elliptische oder aus kurzen Linien bestehende Fügestellen erzeugbar sind. Um andere Fleckgeometrien, zum Beispiel rechteckige oder quadratische Fleckgeometrien, für die punktförmigen und/oder linienförmigen Fügestellen bereitstellen zu können, kann im Strahlengang des Lasers mindestens ein strahlformendes Element positioniert sein.

Das verspiegelte Polygonrad weist vorzugsweise eine als ein regelmäßiges Vieleck (bspw. Polygon) gebildete Grundfläche, eine der Grundfläche entsprechende Deckfläche sowie die Grundfläche mit der Deckfläche verbindende und aus verspiegelten Rechtecken gebildete Mantelfläche auf. Das Polygonrad ist drehbar um eine Drehachse gelagert, wobei vorzugsweise eine elektrische Antriebseinheit vorhanden und ausgebildet ist, das Polygonrad um die senkrecht bezüglich der Einfallsrichtung der Laserstrahlen orientierte Drehachse rotatorisch anzutreiben. Wenn der Laserstrahl auf die verspiegelten Rechtecke der Mantelfläche des Polygonrads auftrifft wird er reflektiert, wobei aufgrund der Drehung des Polygonrads eine sich zeitlich verändernde Ablenkung vorliegt, so dass eine Aneinanderreihung von sich überlappenden einzelnen Punkte und/oder Strichen, die zu den Fügestellen werden, auf den Komponenten auftreffen.

Es ist die Möglichkeit gegeben, dass durch die Ablenkung des Laserstrahls vom Polygonrad die beiden Komponenten in einer Dimension vollständig "gescannt" und damit in einer Dimension vollständig gefügt, insbesondere verschweißt werden. Ob für das Fügen der Bauteile lediglich ein einziges Polygonrad ausreicht, oder ob eine Kaskade aus mehreren Polygonrädern mit einer oder mit mehreren Lasereinrichtungen benötigt wird, hängt ab von beispielsweise den Abmessungen des Polygonrads bzw. dessen verspiegelten Mantelflächen, der Größe der zu fügenden Komponenten und dem Abstand des Polygonrads von den zu fügenden Komponenten. Ob Punkte oder Linien beim Fügevorgang entstehen, ist beispielsweise abhängig von der Breite der verspiegelten Rechtecke der Mantelfläche des Polygonrads auf die der Laserstrahl gerichtet wird, und von denen der Laserstrahl abgelenkt wird.

Die Bestrahlung wenigstens eines Polygonrads erfolgt dabei mit der Lasereinrichtung, die insbesondere als ein gepulster Laser ausgebildet ist. Hierzu kann ein Laser, der ultrakurze Lichtimpulse mit einer Impulsdauer von maximal 10⁻⁹ Sekunden erzeugt, Einsatz finden. Es kann auch ein Pikosekunden-Laser mit einer Impulsdauer zwischen 10⁻⁹ und 10⁻¹² Sekunden verwendet werden. Auch der Einsatz eines Femtosekunden-Lasers mit einer Impulsdauer zwischen 10⁻¹² und 10⁻¹⁵ Sekunden ist möglich. Durch die Länge der Impulse lässt sich der Wärmeeintrag in das Material ebenfalls steuern, wobei der Wärmeeintrag mit steigender Impulsdauer steigt. Wenn die Impulsdauer besonders lange ist, so nähert sich die Lasereinrichtung einem cw-Laser an, wobei "cw" für "continuous wave" steht und "zeitlich konstant abgestrahlte Welle" bedeutet. Wenn der Impuls entsprechend lange ist, dann ist es möglich, dass die Komponenten während dieses einzigen Impulses vollständig "abgefahren" werden, wobei durch die Hochgeschwindigkeits-Rotation des Polygonrads ein mehrfaches "Abfahren" bzw. "Scannen" innerhalb ein- und desselben Impulses erfolgen kann. Auch damit wird aufgrund des schnellen Prozesses nur sehr wenige Wärme in das Material eingetragen. Der Einsatz von mehreren Lasereinrichtungen ist möglich. Die Laserquelle der Lasereinrichtung kann beispielsweise ein Gaslaser, ein Halbleiterlaser oder ein Festkörperlaser sein.

Meist ist es erforderlich, dass die Komponenten entlang einer gewünschten zweidimensionalen Kontur miteinander dauerhaft stoffschlüssig verbunden werden. Um eine solche zweidimensionale Fügekontur herzustellen, ist es von Vorteil, wenn die Komponenten und der Laserstrahl relativ zueinander bewegt werden, wobei durch die Relativbewegung eine zweidimensionale Fügekontur gebildet wird.

Die Relativbewegung zwischen den beiden Komponenten und dem auf die Komponenten auftreffenden Laserstrahl wird beispielsweise durch den Vorschub einer Transporteinrichtung zum Transport der Komponenten erzeugt. Auf diese Weise ist gewährleistet, dass eine Reihe an einzelnen punktförmigen Fügestellen entsteht, um damit die Fügelinie zu bilden. Beispielsweise können auch mehrere Reihen an sich überlappenden punktförmigen Fügestellen erzeugt werden, die dann zu einer besonders dichten Fügelinie führen.

Der Laserstrahl wird bei der vorliegenden Erfindung auf die Komponenten im Wesentlichen senkrecht zu der Ebene gerichtet, in der sich die Komponenten erstrecken. Auf diese Weise entstehen also Schweißnähte, wobei durchgängige Nähte entstehen können, die zudem eine zuverlässige Abdichtfunktion erfüllen.

Es hat sich der Einsatz einer verstellbaren optischen Ablenkeinrichtung als vorteilhaft erwiesen, da dann auch Fügelinien erzeugt werden können, welche einen senkrecht zur Vorschubrichtung der Transporteinrichtung orientierten Anteil umfasst. Wenn eine insgesamt senkrecht bezüglich der Vorschubrichtung der Transporteinrichtung orientierte Fügelinie hergestellt werden soll, so ist es von Vorteil, wenn die optische Ablenkeinrichtung mit einer Geschwindigkeit verstellbar ist oder verstellt wird, die die Vorschubgeschwindigkeit der Transporteinrichtung kompensiert. Auf diese Weise ist es möglich, dass geradlinige Fügelinien auch dann entstehen, wenn das Rohmaterial bzw. die Komponenten von der Transporteinrichtung entlang der Vorschubrichtung fortwährend transportiert werden.

In Analogie zu einem Tintenstrahldrucker ist es auch möglich, dass die Relativbewegung durch Verstellen eines, insbesondere senkrecht bezüglich der Vorschubrichtung, verfahrbaren Laserkopfes der Lasereinrichtung unter Mitnahme des Polygonrads erzeugt wird. Auch auf diese Weise ist es möglich unterschiedlichste Punkte der Komponenten "anzufahren", um sie mit dem Laserstrahl zu bestrahlen und um eine gewünschte Kontur einer Fügelinie aus einer Mehrzahl sich überlappender punktförmiger und/oder linienförmiger Fügestellen herzustellen.

Es besteht die Möglichkeit, den Laserstrahl einfach oder mehrfach zu falten und/oder aufzuteilen und damit eine Mehrzahl an Polygonrädern mit dem von einer einzigen Laserquelle emittierten Laserlicht zu bestrahlen, womit gleichzeitig eine Vielzahl der Mehrzahlen an punktförmigen und/oder linienförmigen Fügestellen an den Komponenten hergestellt werden kann.

Um zusätzlich gewährleisten zu können, dass die Fügestellen lediglich punktförmig oder mit nicht allzu langen Strichen an den Komponenten vorliegen, ist es von Vorteil, wenn die Fügestellen durch ein hochfrequent getaktetes Ein- und Ausschalten der Lasereinrichtung, insbesondere der zugehörigen Laserquelle, erzeugt werden.

Die vorliegende Erfindung ist nicht auf das Fügen von mit vorgefertigten Abmessungen gesehenen Komponenten beschränkt, sondern kann auch für Herstelleinrichtungen im Durchlaufverfahren, d.h. für bandförmiges Rohmaterial genutzt werden. Hierbei kann eine Schneideinrichtung vorgesehen sein, die ausgebildet ist, die gefügten, bandförmigen Rohmaterialien in einzelne Komponenten zu vereinzeln bzw. auf Endmaß zu beschneiden. Auch eine Bearbeitung "von Rolle zu Rolle" ist möglich.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine geschnittene Detailansicht eines Ausschnitts eines Brennstoffzellenstapels mit einer aus zwei Einzelplatten gebildeten Bipolarplatte,
- Fig. 2: eine schematische Seitenansicht einer Vorrichtung zum Fügen von wenigstens zwei Komponenten einer Brennstoffzelle, insbesondere zum Fügen von Einzelplatten zu einer Bipolarplatte,
- Fig. 3: eine schematische Detailansicht auf die Oberfläche einer schon zum Teil gefügten Bipolarplatte, und
- Fig. 4: eine schematische Ansicht der Vorrichtung aus Figur 3, in welcher die Linienführung der Fügelinie illustriert ist, wobei der Übersicht halber die Bipolarplatte in einer Draufsicht und die Vorrichtung in einer Seitenansicht skizziert sind.

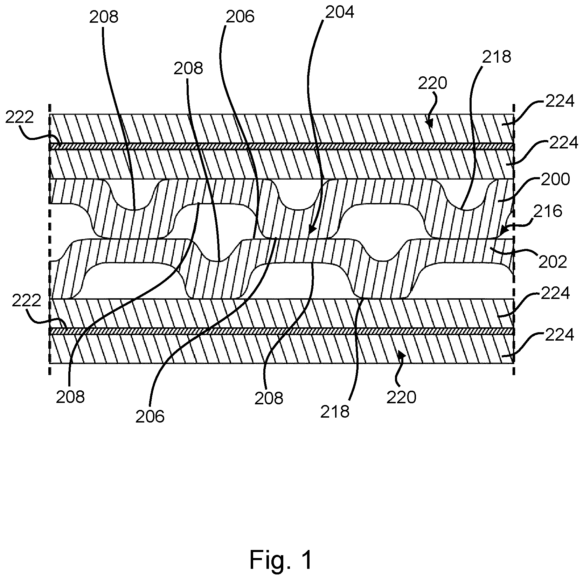

In Figur 1 ist der Ausschnitt eines Brennstoffzellenstapels zu erkennen, der aus mehreren Brennstoffzellen 220 gebildet ist. Jede Brennstoffzelle 220 ist gebildet mit einer Membranelektrodenanordnung 222, welche eine protonenleitfähige Membran umfasst, der auf beiden Seiten jeweils eine Elektrode zugeordnet ist. Die Membranelektrodenanordnung 222 ist ausgestaltet, die elektrochemische Reaktion der Brennstoffzelle auszuführen. Dabei wird ein Brennstoff (z.B. Wasserstoff) an die die Anode bildende Elektrode geführt, wo er katalytisch unter Abgabe von Elektronen zu Protonen oxidiert wird. Diese Protonen werden durch die protonenleitfähige Membran (oder Ionen-Austausch-Membran) zur Kathode transportiert. Die aus der Brennstoffzelle abgeleiteten Elektronen fließen über einen elektrischen Verbraucher, vorzugsweise über einen Elektromotor zum Antrieb eines Fahrzeugs, oder zu einer Batterie. Anschließend werden die Elektronen zur Kathode geleitet oder Elektronen an dieser bereitgestellt. An der Kathode wird das Oxidationsmedium (z.B. Sauerstoff oder Sauerstoff enthaltende Luft) durch die Aufnahme der Elektronen zu Anionen reduziert, die unmittelbar mit den Protonen zu Wasser reagieren.

Mit der Hilfe von Bipolarplatten 216 werden der Brennstoff oder das Kathodengas an Gasdiffusionslagen 224 geleitet, die die jeweiligen Gase diffus verteilt an die Elektroden der Membranelektrodenanordnung 222 führen. Der Brennstoff, das Oxidationsmedium und gegebenenfalls ein Kühlmedium werden durch Kanäle 208 der Bipolarplatte 216 geleitet, die durch Stegrücken aufweisende Stege 206 der Bipolarplatten 216 beidseits begrenzt sind. Wie sich aus der Figur 1 ergibt, liegt hierzu jeweils ein Satz der Stegrücken an einer Gasdiffusionslage 224 an, so dass ein in den Kanälen 208 strömender Reaktant an die Gasdiffusionslage 224 und damit an die Elektrode der Membranelektrodenanordnung 222 abgegebenen werden kann.

Die Bipolarplatte 216 umfasst vorliegend zwei aufeinander gebrachte Einzelplatten 200, 202 die selektiv an ihren zugewandten Stegen 206, insbesondere an deren jeweiligen Stegrücken, miteinander gefügt, insbesondere verschweißt sind. Die sich zugewandten Stege 206 der Einzelplatten 200, 202 bilden typischerweise mit den zwischen den Stegen 206 liegenden Kanälen 208 Leitungen für ein Kühlmedium aus.

Aus Figur 1 wird außerdem ersichtlich, dass die Stege 206 oder deren Stegrücken der Einzelplatten 200, 202 nicht zwangsläufig dieselbe Breite aufweisen müssen, so dass auch unterschiedliche Breiten und oder Tiefen für die Kanäle 208 vorliegen können. Zur dauerhaften Verbindung zweier Einzelplatten 200, 202 sollte jedoch gewährleistet sein, dass zumindest zwei der sich gegenüberliegenden Stege 206 aufeinander aufliegen, die dauerhaft miteinander verbunden, nämlich gefügt, insbesondere verschweißt werden können.

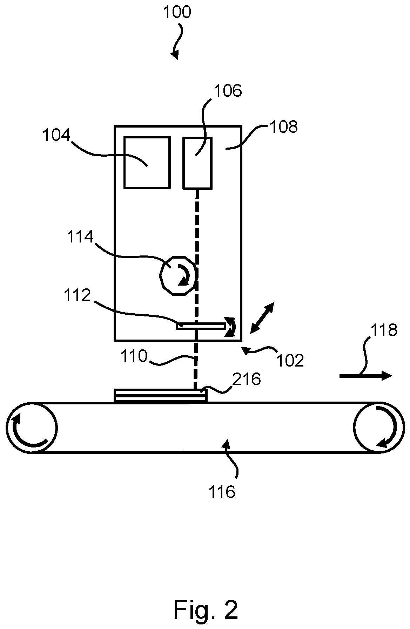

In Figur 2 wird eine Vorrichtung 100 zum Fügen von wenigstens zwei Komponenten einer Brennstoffzelle 218 vorgestellt, die vorliegend insbesondere zum Fügen zweier Einzelplatten 200, 202 zu einer Bipolarplatte 216 ausgebildet ist.

Diese Vorrichtung 100 umfasst eine Lasereinrichtung 108, die eine Laserquelle 106 zur Emission eines gepulsten Laserstrahls 110 besitzt. Die Laserquelle 108 kann ein Gaslaser, ein Halbleiterlaser oder ein Festkörperlaser sein, wobei insbesondere ein CO₂-Laser oder ein Nd:YAG-Laser oder ein Halbleiterlaser/Diodenlaser oder ein Yb:YAG-Laser Einsatz finden kann. Die einzelnen Bauteile der Lasereinrichtung 108 werden von einer Lasersteuerung 104 angesteuert.

Die Laserquelle 106 richtet den Laserstrahl 110 auf ein elektromotorisch, rotierend angetriebenes, verspiegeltes Polygonrad 114. Dieses verspiegelte Polygonrad 114 ist eingerichtet, den Laserstrahl 110 sehr schnell und in Abhängigkeit der Winkelstellung des Polygonrads 114 unter einer Vielzahl von Winkeln abzulenken. Die Lasersteuerung 104 kann dazu eingerichtet sein, die Lasereinrichtung 108, insbesondere die Laserquelle 106, hochfrequent getaktet ein- und auszuschalten, um zusätzlich zu gewährleisten, dass keine allzu langen linienförmigen Laserstrahlen 110 geformt werden, die zu einem zu großen Wärmeeintrag in das Rohmaterial, mithin in die Einzelplatten 200, 202 der Bipolarplatte 216 führen.

Ferner weist die Lasereinrichtung 108 eine dem Polygonrad 114 im Strahlengang des Laserstrahls 110 nachgeschaltete, verstellbare optische Ablenkeinrichtung 112 auf, die eingerichtet ist, den Laserstrahl 110 in Abhängigkeit einer Vorschubgeschwindigkeit einer Transporteinrichtung 116 abzulenken. Die Transporteinrichtung 116 transportiert die Einzelplatten 200, 202 in einer Vorschubrichtung 118. Durch den Vorschub der Transporteinrichtung 116 lassen sich zweidimensionale Fügekonturen realisieren. Um weitere beliebige zweidimensionale Fügekonturen für den Fügevorgang bereitstellen zu können, kann die Lasereinrichtung 108 zudem mit einem Laserkopf 102 ausgestattet sein, der ausweislich des neben der Lasereinrichtung 108 dargestellten diagonal verlaufenden Doppelpfeils senkrecht bezüglich der Vorschubrichtung 118 der Transporteinrichtung 116 elektromotorisch verstellbar oder "verfahrbar" ist.

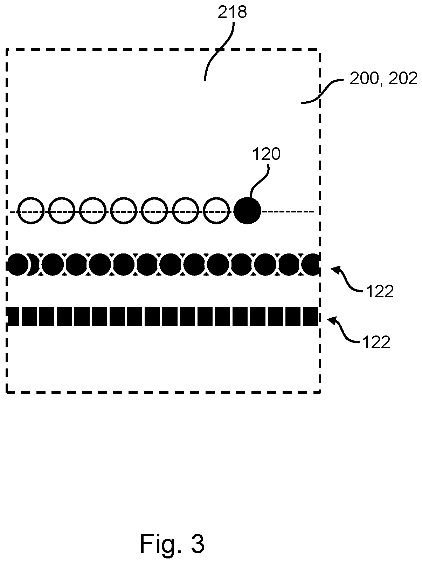

Die Funktionsweise der Vorrichtung 100 wird anhand von Figur 3 verdeutlicht, welche eine Draufsicht auf eine Oberfläche 218 der Einzelplatten 200, 202 illustriert. Sobald die Transporteinrichtung 116 die Komponenten der Brennstoffzelle 218 gegenüber der Lasereinrichtung 108 angeordnet oder positioniert hat, wird der Laserstrahl 110 auf das rotierende, verspiegelte Polygonrad 114 entsendet. Hierdurch wird der Laserstrahl 110 aufgrund der Rotation des Rads unter einer Vielzahl von Winkeln abgelenkt und bildet an den Einzelplatten 200, 202 eine Fügelinie 122 aus einer Vielzahl an überlappend aneinandergereihten, punktförmigen und/oder strichförmigen Fügestellen 120 aus, wodurch die beiden Platten dauerhaft stoffschlüssig miteinander verbunden werden. Der Laserstrahl 110 kann bzw. sollte fokussiert auf die Komponenten auftreffen, damit ein gezieltes Aufschmelzen des Materials und ein Fügen der Komponenten wirksam hervorgerufen werden kann. Um beliebige Fügekonturen herzustellen, werden die Platten relativ bezüglich dem Laserstrahl 110 verstellt; entweder durch den Vorschub der Transporteinrichtung 116 und/oder durch den verstellbaren Laserkopf 102.

Durch diese aneinandergereihte, einzelpunkt- oder einzelstrichartige Gestaltung wird nur eine geringe Wärmemenge beim Erzeugen einer durchgehenden Fügelinie 122 in das Material eingetragen, sodass ein geringerer wärmeinduzierter Verzug am Bauteil erfolgt. Gegebenenfalls wird dabei mit den punktförmigen Fügestellen 120 eine vorgegebene Linie auch mehrfach abgefahren, damit sich eine geschlossene oder eine stärkere Fügelinie 122 aus den überlappenden Fügestellen 120 herausbildet.

Der Figur 3 ist ferner zu entnehmen, dass die punktförmigen und/oder strichförmigen Fügestellen 120 nicht zwangsläufig kreisrund geformt sein müssen. Deshalb kommt auch der Einsatz anderer vorteilhafter Fleckgeometrien in Betracht, die beispielsweise mittels geeigneter strahlformender Elemente erzeugbar sind. So zeigt die in der Figur 3 ganz unten dargestellte Fügelinie 122 eine überlappende Aneinanderreihung von rechteckigen, insbesondere quadratischen punktförmigen Fügestellen 120, die einen geringeren Überlappungsgrad als kreisrunde Fügestellen 120 aufweisen müssen, um zu einer gewünschten Dichtigkeit des Verbunds zu führen.

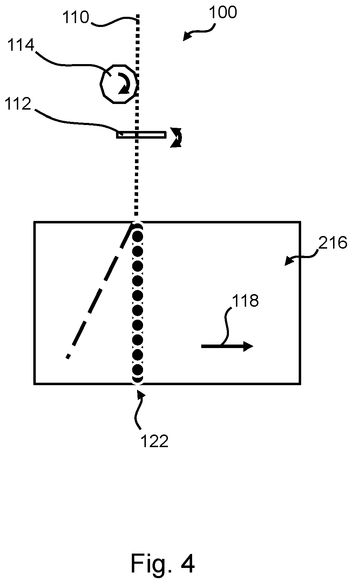

Um den Prozess zur Herstellung des gefügten Verbundes zusätzlich beschleunigen zu können, wird die optische Ablenkeinrichtung 112 eingesetzt, auf die unter Bezugnahme zu Figur 4 nachstehend eingegangen wird. Zugunsten der Übersichtlichkeit vereint die Figur 4 die Seitenansicht der lediglich vereinfacht dargestellten Vorrichtung 100 und die Draufsicht auf die Oberfläche 218 der Einzelplatten 200, 202, die zu einer Bipolarplatte 216 verschweißt werden sollen.

Die Bipolarplatte 216 wird von der Transporteinrichtung 116 entlang der Vorschubrichtung 118 transportiert. Würde die optische Ablenkeinrichtung 112 nicht verwendet werden, so führte dies zu dem strichliert dargestellten Verlauf der aus mehreren punktförmigen und/oder strichförmigen Fügestellen 120 gebildeten Fügelinie 122. Die optische Ablenkeinrichtung 112, die insbesondere als ein Spiegel oder als ein Prisma gebildet ist, ist nach Art eines Scanners verstellbar oder verschwenkbar. Die optische Ablenkeinrichtung 112 kann dabei in Abhängigkeit der Vorschubgeschwindigkeit der Transporteinrichtung 116 verstellt werden. Auf diese Weise wird es durch den Einsatz der optischen Ablenkeinrichtung 112 möglich, eine senkrecht bezüglich der Vorschubrichtung 118 orientierte Fügelinie 122 zu erstellen, wie sie in der Figur zu erkennen ist. Die Verstellung oder die Ablenkung des Laserstrahls 110 erfolgt dazu vorzugsweise mit einer Geschwindigkeit, die die Vorschubgeschwindigkeit der Transporteinrichtung 116 gerade kompensiert. Auf diese Weise kann eine Fügelinie 122 auch dann erzeugt werden, wenn die Bipolarplatte 216 von der Transporteinrichtung 116 in Vorschubrichtung 118 transportiert wird.

Mit der vorliegenden Erfindung werden folglich eine Vorrichtung 100 und ein Verfahren zum Fügen von wenigstens zwei Komponenten einer Brennstoffzelle 218 angegeben, die sich gegenüber aus dem Stand der Technik bekannten Verfahren durch eine verkürzte Taktzeit auszeichnen. Die Vorrichtung 100 und das erfindungsgemäße Verfahren sind daher für die Serienfertigung geeignet und senken gegenüber bekannten Verfahren und Vorrichtungen den Ausschussanteil bei der Fertigung, insbesondere bei der Fertigung von Bipolarplatten 216 aufgrund des geringeren Wärmeeintrags in das (Roh-)Material der Bauteile. Die erfindungsgemäß gebildeten Fügelinien 122 gewährleisten die nötige Dichtigkeit und die benötigte elektrische Kontaktierung, wobei aufgrund des geringeren Wärmeeintrags in die Rohmaterialien kein oder ein verringerter thermisch induzierter Verzug einhergeht, der sich bei auf nachfolgende Fertigungsschritte nachteilhaft auswirken könnte.

### BEZUGSZEICHENLISTE:

- 100: Vorrichtung
- 102: Laserkopf
- 104: Lasersteuerung
- 106: Laserquelle
- 108: Lasereinrichtung
- 110: Laserstrahl
- 112: Ablenkeinrichtung (Spiegel / Prisma oder dergl.)
- 114: Polygonrad (verspiegelt)
- 116: Transporteinrichtung
- 118: Vorschubrichtung
- 120: Fügestelle
- 122: Fügelinie
- 200: erste Einzelplatte
- 202: zweite Einzelplatte
- 206: Stege
- 208: Kanal
- 216: Bipolarplatte
- 218: Außenoberfläche
- 220: Brennstoffzelle
- 222: Membranelektrodenanordnung
- 224: Gasdiffusionslage

## Patentansprüche

1. Verfahren zum Fügen von wenigstens zwei Komponenten einer Brennstoffzelle (218), insbesondere zum Fügen zweier Einzelplatten (200, 202) einer Brennstoffzelle (218) zu einer Bipolarplatte (216), umfassend die Schritte:
- Bereitstellen einer ersten Komponente der Brennstoffzelle (218) und Bereitstellen wenigstens einer zweiten Komponente der Brennstoffzelle (218), und **gekennzeichnet durch** den Schritt:
- Entsenden eines gepulsten Laserstrahls (110) einer Lasereinrichtung (108) auf ein rotierendes, verspiegeltes Polygonrad (114), wodurch der Laserstrahl (110) eine Fügelinie (122) aus einer Vielzahl an überlappend aneinandergereihten, punktförmigen und/oder strichförmigen Fügestellen (120) an den Komponenten bildet.

2. Verfahren nach Anspruch 1, **dadurch gekennzeichnet, dass** die Komponenten und der Laserstrahl (110) relativ zueinander bewegt werden, und dass durch die Relativbewegung eine zweidimensionale Fügekontur gebildet wird.

3. Verfahren nach Anspruch 2, **dadurch gekennzeichnet, dass** die Relativbewegung von einem Vorschub einer Transporteinrichtung (116) zum Transport der Komponenten erzeugt wird.

4. Verfahren nach Anspruch 3, **dadurch gekennzeichnet, dass** zum Bilden der Fügelinie (122), welche einen senkrecht zur Vorschubrichtung (118) der Transporteinrichtung (116) orientieren Anteil umfasst, der vom Polygonrad (114) teilweise aufgeweitete Laserstrahl (110) von einer verstellbaren optischen Ablenkeinrichtung (112) in Abhängigkeit des Vorschubs abgelenkt wird.

5. Verfahren nach Anspruch 4, **dadurch gekennzeichnet, dass** die optische Ablenkeinrichtung (112) zum Bilden einer senkrecht bezüglich der Vorschubrichtung (118) orientierten Fügelinie (122) an den Komponenten mit einer Geschwindigkeit verstellt wird, die die Vorschubgeschwindigkeit kompensiert.

6. Verfahren nach einem der Ansprüche 1 bis 5, **dadurch gekennzeichnet, dass** die Relativbewegung durch Verstellen eines verfahrbaren Laserkopfes (102) der Lasereinrichtung (108) unter Mitnahme des Polygonrads (114) erzeugt wird.

## Claims

1. A method for joining at least two components of a fuel cell (218), in particular for joining two individual plates (200, 202) of a fuel cell (218) to form a bipolar plate (216), comprising the steps of:
- providing a first component of the fuel cell (218) and providing at least a second component of the fuel cell (218), and **characterized by** the step of:
- emitting a pulsed laser beam (110) from a laser device (108) onto a rotating, polygon mirrored wheel (114), whereby the laser beam (110) forms a joint line (122) from a plurality of overlapping, dot-shaped and/or line-shaped joints (120) on the components.

2. The method according to claim 1, **characterized in that** the components and the laser beam (110) are moved relative to one another, and **in that** a two-dimensional joining contour is formed by the relative movement.

3. The method according to claim 2, **characterized in that** the relative movement is generated by a feed of a transportation unit (116) for transporting the components.

4. The method according to claim 3, **characterized in that** in order to form the joint line (122), which comprises a portion oriented perpendicularly to the feed direction (118) of the transportation unit (116), the laser beam (110) partially expanded by the polygon wheel (114) is deflected by an adjustable optical deflecting device (112) as a function of the feed.

5. The method according to claim 4, **characterized in that** the optical deflecting device (112) for forming a joint line (122) oriented perpendicularly with respect to the feed direction (118) is adjusted at the components at a speed which compensates for the feed speed.

6. The method according to one of claims 1 to 5, **characterized in that** the relative movement is generated by adjusting a movable laser head (102) of the laser device (108) while carrying the polygon wheel (114).

## Revendications

1. Procédé d'assemblage d'au moins deux composants d'une pile à combustible (218), en particulier d'assemblage de deux plaques individuelles (200, 202) d'une pile à combustible (218) en une plaque bipolaire (216), comprenant les étapes consistant à :
- fournir un premier composant de la pile à combustible (218) et fournir au moins un second composant de la pile à combustible (218), et **caractérisé par** l'étape consistant à :
- émettre un faisceau laser pulsé (110) d'un appareil laser (108) sur une roue polygonale (114) réfléchissante en rotation, moyennant quoi le faisceau laser (110) forme une ligne d'assemblage (122) constituée d'une pluralité de points d'assemblage (120) en forme de points et/ou de traits alignés en chevauchement sur les composants.

2. Procédé selon la revendication 1, **caractérisé en ce que** les composants et le faisceau laser (110) sont déplacés l'un par rapport à l'autre, et **en ce qu'**un contour d'assemblage bidimensionnel est formé par le déplacement relatif.

3. Procédé selon la revendication 2, **caractérisé en ce que** le déplacement relatif est généré par une avance d'un appareil de transport (116) pour le transport des composants.

4. Procédé selon la revendication 3, **caractérisé en ce que** pour former la ligne d'assemblage (122), qui comprend une part orientée perpendiculairement à la direction d'avance (118) de l'appareil de transport (116), le faisceau laser (110) partiellement élargi par la roue polygonale (114) est dévié par un appareil de déviation optique réglable (112) en fonction de l'avance.

5. Procédé selon la revendication 4, **caractérisé en ce que** l'appareil de déviation optique (112) est déplacé pour former une ligne d'assemblage (122) orientée perpendiculairement par rapport à la direction d'avance (118) au niveau des composants à une vitesse qui compense la vitesse d'avance.

6. Procédé selon l'une quelconque des revendications 1 à 5, **caractérisé en ce que** le déplacement relatif est généré par le déplacement d'une tête laser déplaçable (102) de l'appareil laser (108) en entraînant la roue polygonale (114).
